Europäisches Patentamt

European Patent Office

Office européen des brevets

(19)

(11) Veröffentlichungsnummer: **0 154 701**
**B1**

(12) **EUROPÄISCHE PATENTSCHRIFT**

(45) Veröffentlichungstag der Patentschrift:
09.08.89

(51) Int. Cl.⁴: **G 01 J 3/28**, G 02 F 1/33

(21) Anmeldenummer: 84115149.1

(22) Anmeldetag: 11.12.84

(54) Braggzellen-Spektralanalysator.

(30) Priorität: 10.02.84 DE 3404845

(43) Veröffentlichungstag der Anmeldung:
18.09.85 Patentblatt 85/38

(45) Bekanntmachung des Hinweises auf die Patenterteilung: 09.08.89 Patentblatt 89/32

(84) Benannte Vertragsstaaten:
DE FR GB IT NL

(56) Entgegenhaltungen:
DE–B– 2 436 536
US–A– 3 794 975

(73) Patentinhaber: Siemens Aktiengesellschaft Berlin und München
Wittelsbacherplatz 2
D-8000 München 2 (DE)

(72) Erfinder: Storck, Eckhard, Dr.,
Argelsrieder Strasse 27
D-8000 München 71 (DE)
Erfinder: Stockmann, Michael, Dipl.-Phys.
Bert-Brecht-Allee 10
D-8000 München 83 (DE)

Jouve, 18, rue St-Denis, 75001 Paris, France

## Beschreibung

Die Erfindung betrifft einen Braggzellen-Spektralanalysator nach dem Oberbegriff des Patentanspruchs.

Braggzellen werden üblicherweise mit einem zylindrisch fokussierten Laserstrahl ausgeleuchtet, und zwar so, daß der Fokus in Form einer fokalen Linie des Laserstrahls innerhalb der Braggzelle liegt (konfokale Ausleuchtung).

Aufgabe der Erfindung ist es, aufzuzeigen, wie die untere Dynamikgrenze einer Braggzelle herabgesetzt werden kann.

Diese Aufgabe wird durch die im kennzeichnenden Teil des Patentanspruchs angegebenen Merkmale gelöst.

Es sei darauf hingewiesen, daß die defokale Ausleuchtung einer Braggzelle im Zusammenhang mit akustooptischen Buchstabenanzeigen und nicht im Zusammenhang mit Spektralanalysatoren aus der US-A-3 794 975 bekannt ist.

Zur Erfindung haben folgende Erkenntnisse geführt :.

Die untere Dynamikgrenze der Braggzelle ist durch die streulichtäquivalente Signalleistung NEP gegeben. Diese ist proportional zum Streulicht, das von der nullten Ordnung in das Signalband gestreut wird. Dieses Streulicht ist um so größer, je kleiner die fokale Ausdehnung des Laserstrahls in dem LiNbO$_5$-Kristall der Braggzelle oder auf seiner Oberfläche ist. Man muß die Braggzelle also mit einem möglichst großen Strahlquerschnitt ausleuchten. Die Grenze nach oben ist durch die Ausdehnung des Schallfeldes in der Braggzelle gegeben, dessen Abmessungen üblicherweise etwa 15 mm x 0,5 mm beträgt.

Man könnte eine solche Ausleuchtung im Prinzip und am einfachsten durch eine ebene Welle vom Querschnitt des Schallfeldes, üblicherweise also mit einer ebenen Welle mit einer Querschnittsfläche von etwa 15 mm x 0,5 mm vornehmen. Zur Erzeugung einer solchen ebenen Welle müssen aber geeignete Optiken, beispielsweise Zylinderlinsen mit eben diesem Querschnitt ausgeleuchtet werden. In diesen schmal ausgeleuchteten Optiken oder Zylinderoptiken wird starkes Streulicht erzeugt, das sich dem Streulicht der nullten Ordnung überlagert und die angestrebte Herabsetzung der unteren Dynamikgrenze verhindert.

Ein fokussierter Laserstrahl kann dagegen ohne wesentliches zusätzliches Streulicht hergestellt werden. Deshalb wird erfindungsgemäß die Braggzelle mit einem fokussierten Strahl ausgeleuchtet, wobei aber der Fokus des Laserstrahls nicht wie bisher in die Braggzelle sondern außerhalb der Braggzelle gelegt ist.

Die Erfindung wird anhand der Figuren in der nachfolgenden Beschreibung näher erläutert. Von den Figuren zeigen

Figur 1 in schematischer Darstellung eine herkömmliche konfokale Ausleuchtung einer Braggzelle,

Figur 2 in schematischer Darstellung die neue defokale Ausleuchtung der Braggzelle,

Figur 3 den schematischen Aufbau eines Braggzellen-Spektralanalysators mit einem Einzeldetektor zur Abtastung der Lichtverteilung,

Figur 4 die Signal- und Störlichtverteilung in der Detektorebene des Braggzellen-Spektralanalysators nach Figur 3 bei konfokaler Ausleuchtung der Braggzelle, und

Figur 5 die Signal- und Störlichtverteilung in der Detektorebene des Braggzellen-Spektralanalysators nach Figur 3 bei defokaler Ausleuchtung der Braggzelle.

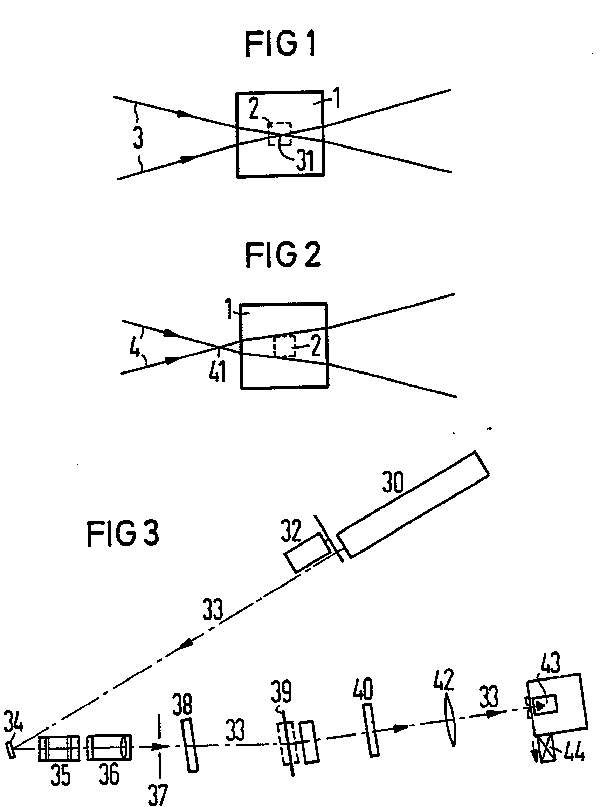

In den Figuren 1 und 2 ist mit 1 ein in Draufsicht gezeigter LiNbO$_3$-Kristall bezeichnet, auf dem die gestrichelt umrandete Braggzelle 2 realisiert ist. Im Fall der Figur 1 liegt der Fokus 31 des Laserstrahls 3 innerhalb der Braggzelle 2. Im Fall der Figur 2 liegt dagegen der Fokus 41 des Laserstrahls 4 außerhalb der Braggzelle 2, und zwar so weit vor der Braggzelle, daß der Laserstrahl 4 die Apertur der Braggzelle 2 möglichst ganz ausleuchtet.

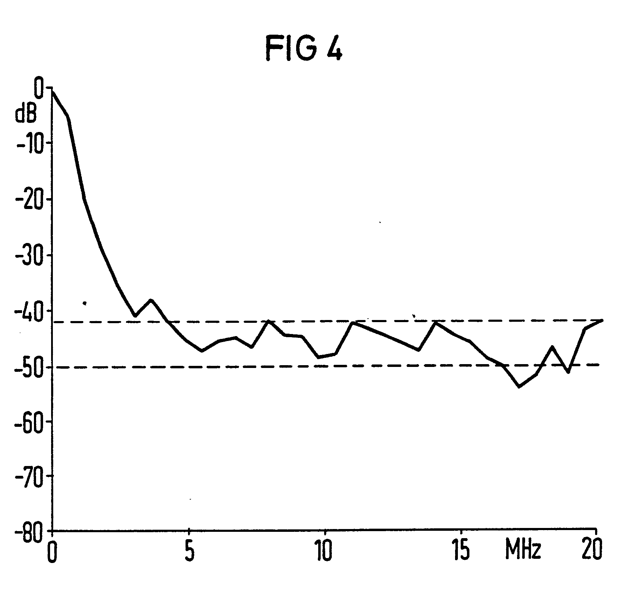

Die Spektren der konfokalen und defokalen Ausleuchtung wurden mit dem in Figur 3 dargestellten Braggzellen-Spektralanalysator mit Einzeldetektor gemessen und miteinander verglichen.

Der Braggzellen-Spektralanalysator nach Figur 3 weist einen Laser 30 auf, der einen von einem Chopper 32 zerhackten und lediglich durch einen Strahl auf der optischen Achse des Analysators angedeuteten Laserstrahl 33 in Richtung eines Umlenkspiegels 34 aussendet. Der umgelenkte Laserstrahl 33 durchstrahlt einen Abschwächer 35 und wird durch eine Aufweitungsoptik 36 auf größeren Durchmesser aufgeweitet. Der aufgeweitete Laserstrahl 33 durchstrahlt zunächst eine Begrenzungsblende 37 und wird dann durch eine Zylinderlinse 38 auf eine Fokuslinie 39 fokussiert. Im Strahlengang des fokussierten Laserstrahls ist die Braggzelle 2 angeordnet, und zwar im Fall der konfokalen Ausleuchtung so, daß die Fokuslinie 39 in der Mitte der Braggzelle liegt, während sie im Fall der defokalen Ausleuchtung in einem Abstand d hinter der Fokuslinie 39 angeordnet ist. Die gestrichelt umrahmte Braggzelle 2 deutet den Fall der konfokalen Ausleuchtung und die durchgezogen umrahmte Braggzelle 2 deutet den Fall der defokalen Ausleuchtung an.

Das aus der Braggzelle 2 austretende Licht durchstrahl zunächst eine Zylinderlinse 40 und wird dann von einer Fourier-Linse 42 auf einen Einzeldetektor 43 fokussiert, der durch einen Schrittmotor 44 senkrecht zur optischen Achse verschiebbar ist.

Für die Messung wurde die Braggzelle 3 500S der Fa. CTI verwendet. Der Abstand des Fokus 39 von der Mitte der Braggzelle 2 betrug bei der defokalen Ausleuchtung 24 mm. Das angelegte Hochfrequenzsignal betrug sowohl bei der konvokalen als auch bei der defokalen Ausleuchtung + 17 dBm.

Die Figur 4 zeigt die gemessene Signal- und Störlichtverteilung bei der konfokalen Ausleuchtung der Braggzelle 2. Man erkennt den Störuntergrund bei etwa — 43 dB, entsprechend einer Signalleistung NEP von 17 dBm — 43 dB = — 26 dBm.

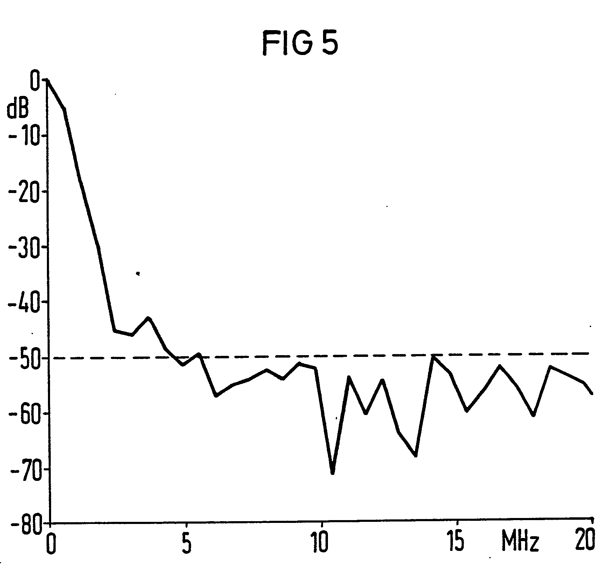

Die Figur 5 zeigt dagegen das entsprechende Ergebnis bei defokaler Ausleuchtung der Braggzelle 2. Der Störuntergrund liegt jetzt etwa bei — 50 dB, d. h. die untere Dynamikgrenze konnte durch defokale Ausleuchtung um etwa 7 dB auf - 33 dBm herabgesetzt werden, d. h. die streulichtäquivalente Signalleistung NEF beträgt jetzt — 33 dBm.

. In einem zweiten Vergleichsexperiment wurde im Braggzellenanalysator nach Figur 3 der Einzeldetektor 43 durch ein Detektorarray (Reticon CCPD 128 x 8, 1 ms Integrationszeit) ersetzt. Damit wurde die untere Dynamikgrenze der Braggzelle direkt gemessen. Es ergab sich, daß bei konfokaler Ausleuchtung der Braggzelle ohne Signal und mit Signal das Signal bei — 26 dBm gerade die Spitzen des Störuntergrundes erreicht. Bei defokaler Ausleuchtung ergab sich, daß das Signal bereits bei — 33 dBm die Spitzen des Störuntergrundes erreicht.

## Patentanspruch

Braggzellen-Spektralanalysator, bei dem die Braggzelle (2) mit einem Laserstrahl (33) ausgeleuchtet wird, dadurch gekennzeichnet, daß die Ausleuchtung zur Herabsetzung der Dynamikgrenze der Zelle (2) defokal erfolgt.

## Claim

Bragg cell. spectral analyser in which the Bragg cell (2) is illuminated by a laser beem (33), characterized in that in order to reduce the dynamic limit of the cell (2) the illumination takes place defocally.

## Revendication

Analyseur de spectres à cellule de Bragg, dans lequel la cellule de Bragg (2) est éclairée par un faisceau laser (33), caractérisé par le fait que l'éclairement est réalisé d'une manière défocalisée afin de réduire la limite dynamique de la cellule (2).

# FIG 1

# FIG 2

# FIG 3

# FIG 4

# FIG 5